# EUROPEAN PATENT SPECIFICATION

(11) **EP 4 321 012 B1**
(45) Date of publication and mention of the grant of the patent: **28.10.2026**
(21) Application number: 22396002.2
(22) Date of filing: 08.08.2022
(51) Int. Cl.: A01F 29/09, A01F 29/10

(54) **BALE HANDLING AND BREAKING APPARATUS**
VORRICHTUNG ZUM HANDHABEN UND AUFBRECHEN VON BALLEN
APPAREIL DE MANIPULATION ET DE RUPTURE DES BALLES

(43) Date of publication of application: 14.02.2024
(73) Proprietor: Pieti, Pauli, 35300 Orivesi (FI)
(72) Inventor: Pieti, Pauli, 35300 Orivesi (FI)
(74) Representative: Koivisto, Harri Kristian

(56) References cited:
- CN-U- 209 609 270
- IE-A2- S 990 822
- US-A- 5 865 589
- US-A1- 2003 019 345
- US-A1- 2021 251 146
- US-B1- 6 572 039
- US-B2- 8 453 423
- US-B2- 8 528 843

## Description

The inventions relates to a handling and breaking apparatus of large-sized hay, feed and straw bales, such as ones weighing more than 100 kilograms, wherein the bales are transferrable and controllably breakable by means of the apparatus utilising a work machine, such as a tractor or a telescopic handler, when said apparatus includes attachment parts for attaching to loader connections of said work machines and connections for taking driving power for said apparatus from the power outlets of said work machines.

Previous is known bale-forming apparatus from publication US2021251146A1. This apparatus has some structural features as listed in the above preamble. However, US publication relates to bale-forming apparatus whereas this new invention relates to bale handling and bale breaking apparatus which are operating by mechanical way. This new invention consists of essentially different use and meaning compared with the above referred US application 2021251146.

Previously are known also +in the larger size class of bales, such as ones weighing more than 100 kilograms, the use of round bales for the collection of hay and straw from the fields and their preservation for later use. There are also known square bales.

Bales are collected either as dry bales, wherein they are not made until the sun and winds have dried hay or straw sufficiently on the field, or as fresh bales, wherein they are wrapped air-tightly into plastic after baling. Dry bales need to be stored indoors. If they are stored outdoors, they have to be covered by a shelter or an equivalent rain shield. The preserved bales are put into use by removing their plastic wrapping, if one has been used, and by removing strings or tie-nettings tied around the bale used for binding in the first step. After this, a required amount of material is detached from the bale in various ways by breaking or unthreading.

Working in the above-described way, the breaking of heavy bales and the transport of bale contents e.g. for cows on a livestock farm is slow and awkward especially when one needs to break several bales at feeding time. In order to avoid these disadvantages, a novel apparatus has been developed for breaking and handling bales, wherein the apparatus provides a significant improvement to prior art. The apparatus according to the invention is characterised by that the breaker knives being installed in a knife housing included in the apparatus to perform the breaking of the bale from its lower surface, wherein said breaker knives comprise both straight knives and knifes having rotated, threaded or curved knife parts and that the apparatus further includes rails and parts supported by said rails, which parts include said attachment parts as well as power units to implement a movement arrangement, by means of which, a distance of the bale grippers from said knife housing is adjustable.

Some preferable embodiments of the invention are characterised by what is stated in the enclosed dependent claims.

The advantage of the invention is that round bales of greater weight are transportable and breakable safely and as intended. The bales can be broken either directly onto a feeding stand or also directly into a feed trolley by the work machine operator using the apparatus. Due to the apparatus, the feed broken from the bale is loose feed and its breaking poses no risk of damaging the stand or the trolley. Additionally, when moving among the cattle and breaking the bales onto stands, the work is precise due to good visibility. Even frozen bales can be broken by means of the apparatus. The handling of a square bale is also possible.

Next, the invention will be described in more detail with reference to the accompanying drawings in which
Fig. 1 shows an apparatus in a position wherein it is to pick a bale being on the ground on its side.
Fig. 2 shows a side view of the apparatus wherein the bale is pressed by bale grippers and the apparatus is turned into a vertical position but not lowered to a breaking position.
Fig. 3 shows an oblique side view of the apparatus without a bale and with a part of its knife housing removed.

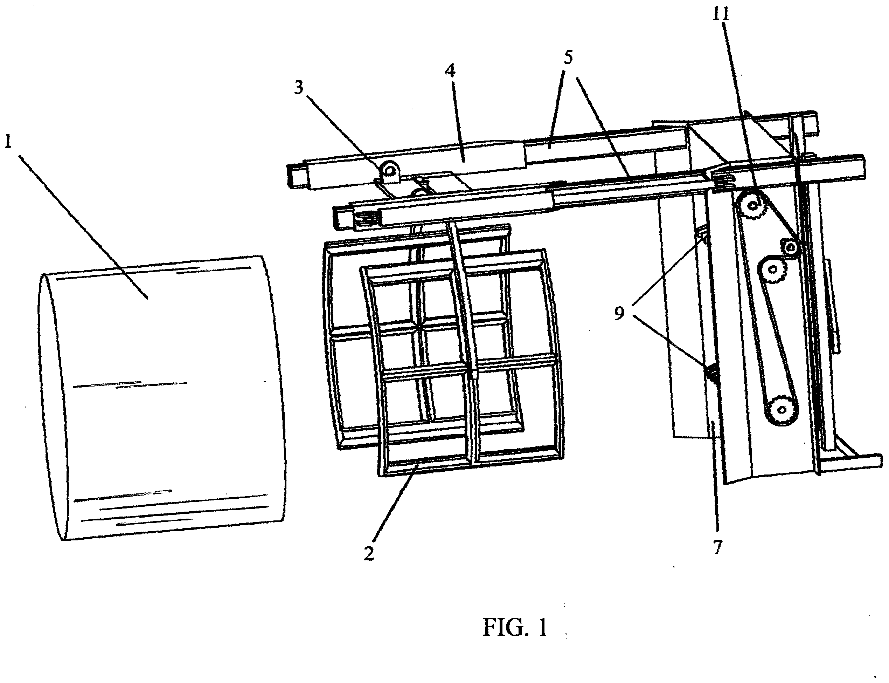

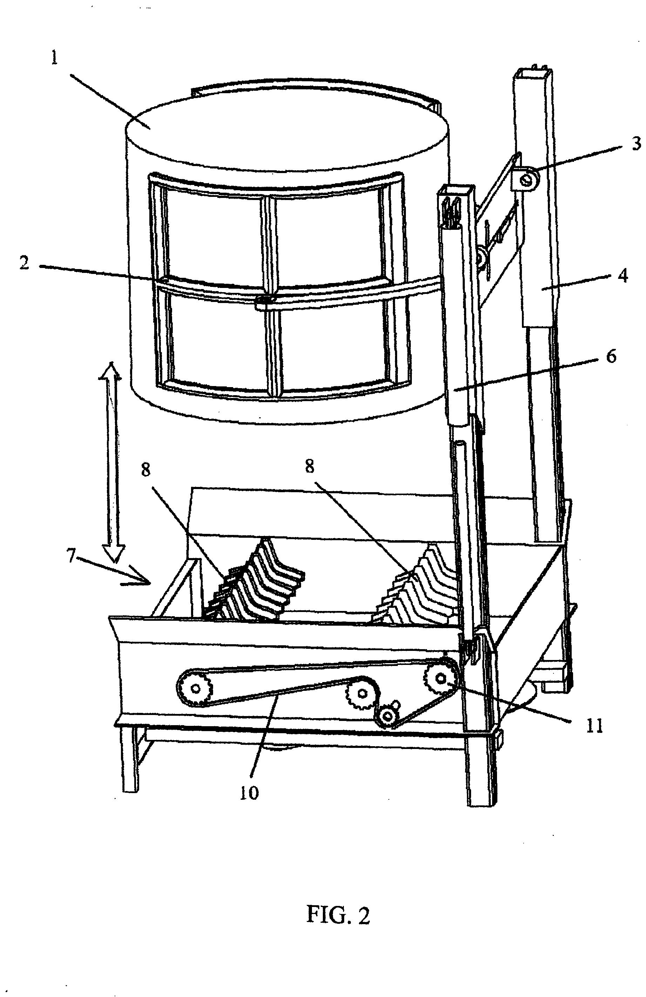

Fig. 1 shows an apparatus according to the invention coming to take a bale 1 into bale grippers 2. The bale grippers 2 open and press by means of a hydraulic cylinder which is not shown in the figures. The bale grippers 2 are attached to the apparatus via parts 4 and the parts 4 again include attaching means 3 with which the apparatus is attached to loader connections of a tractor or a telescopic handler. The parts 4 are of squared pipe profile, wherein they can move supported by rails 5 with the bale grippers 2 such that the bale grippers 2 can be transferred closer to a knife housing 7 of the apparatus and correspondingly farther from it. The parts 4 are moved supported by the rails 5 by means of hydraulic cylinders 6 which are shown in Fig. 2. In the knife housing 7, there is a drive implemented with a chain 10, wherein a motor 11 rotates a shaft selected as the drive shaft from which rotating force transmits to other shafts of breaker knives 9 (shown in Fig. 2) which are breaking the bale. The bale grippers 2 can grip both bales 1 wrapped in plastic or bales 1 bound by tie-nettings or strings. Cap parts of upper and lower ends of the plastic wrapping are removed before the bale 1 is gripped by the bale grippers and lowered onto the breaker knives 9 of the knife housing 7. When the apparatus is turned in the vertical position shown in Fig. 2 and the bale 1 is lowered onto the breaker knives 9, the bale grippers 2 are opened some such that it is also possible to remove a plastic section surrounding a cylindrical part of the bale 1. At the same time, possible other tie-nets or strings in the cylindrical part are also removed. In the breaking step of the bale 1, the bale grippers 2 are lowered for their adjustment length down towards the breaker knives 9 and, if required, the grippers are opened slightly in order for the whole bale to lower on top of the breaker knives 9 and becomes broken.

Fig. 2 shows knife drums 8, of which there are two pieces, which perform the breaking of the bales 1. They are rotated into different directions such that both knife drums 8 try to transfer bale material broken from the bales towards the middle part of the knife housing 7. There can also be several knife drums 8 most preferably installed symmetrically. Their rotation directions are also arranged such that they transfer the loosened material into the middle part of the knife housing 7. The breaker knives are 9 are knifes and at least part of them are knifes whose knife flange is rotated, curved or threaded in order to break the bale 1 in addition to their cutting operation.

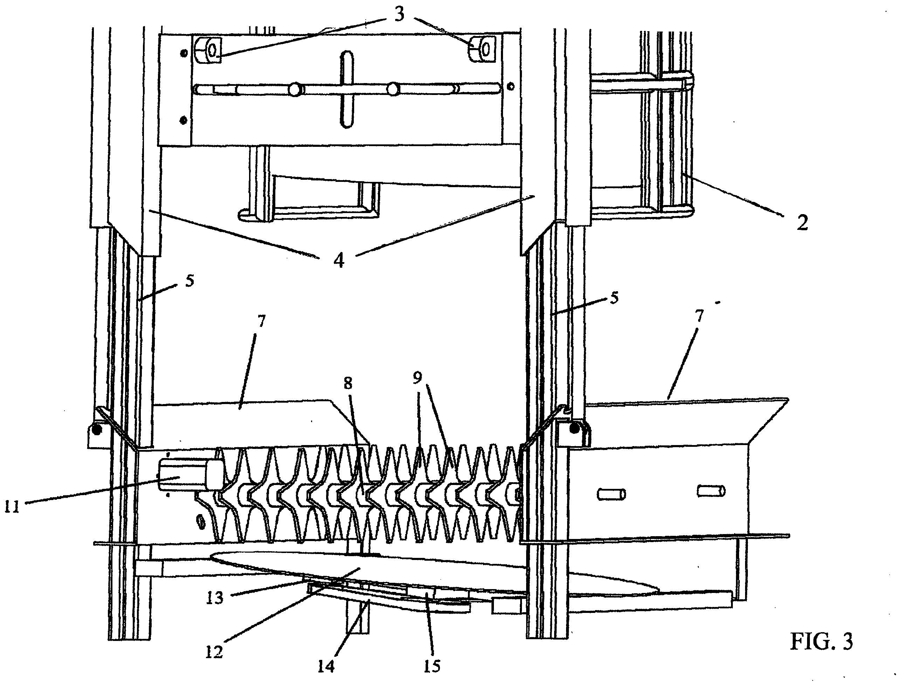

Fig. 3 shows the lower end of the apparatus, wherein the lower part of the knife housing 7 includes a rotatable distributor plate 12 around the middle part of which the broken bale material falls. Some plates of the knife housing 7 have been removed in order to show the distributor plate 12 with its support structure. A part 15 contains a bearing for the rotation of the distributor plate 12 and a housing 14 contains a power transmission for the rotation from a motor 13.

## Claims

1. An apparatus for handling and breaking a large-sized hay, feed or straw bale (1) weighing more than 100 kilograms, said apparatus including:
attachment parts (3) for attaching the apparatus to loader connections of a work machine;
connections for receiving driving power for said apparatus from at least one power outlet of the work machine;
rotatable breaker knives (9);
bale grippers (2), having an adjustable opening for gripping the bale (1); parts (4) attached to bale grippers (2); and
rails (5) supporting movably the parts (4) for transferring the bale (1) and for lowering the bale (1) on top of the rotatable breaker knives (9),
**characterized in that** the apparatus further including:
a knife housing (7), wherein said breaker knives (9) are in the knife housing (7);
the breaker knives (9) are configured to break the bale (1) from its lower surface, wherein said breaker knives (9) comprise both straight knives and knives having curved flange;
the breaker knives (9) in the knife housing (7) are fitted on horizontal shafts to form at least two rotating knife drums (8) with said shafts;
and that the apparatus further includes rails (5) and parts (4) supported by said rails, which parts (4) include said attachment parts (3) as well as power units (6) to implement a movement arrangement, by means of which, a distance of the bale grippers (2) from said knife housing (7) is adjustable.

2. An apparatus according to claim 1, **characterized in that** at least the main part of the knife drums (8) has such a rotation direction where the breaker knives (9) try to transfer material loosened from the bale (1) towards the middle and to fall below the bale (1).

3. An apparatus according to claim 1, **characterized in that** the knife housing (7) includes a distributor plate (12) located below the knife drums (8) which plate is arranged to drop material loosened from the bale (1) at a selected point on the outer edge down during the breaking of the bale (1).

4. An apparatus according to claim 1, **characterized in that** the bales (1) are arranged to press against the breaker knives (9) both due to their own weight and due to the movement of the bale grippers (2).

## Patentansprüche

1. Gerät zum Handhaben und Aufbrechen eines großformatigen Heu-, Futter- oder Strohbales (1) mit einem Gewicht von mehr als 100 Kilogramm, wobei das Gerät Folgendes einschließt:
Befestigungsteile (3) zur Befestigung des Geräts an den Ladeverbindungen einer Arbeitsmaschine;
Verbindungen zum Empfangen von Antriebsenergie für das Gerät von mindestens einem Energieauslass der Arbeitsmaschine;
drehbare Brechmesser (9);
Ballenzangen (2) mit einer einstellbaren Öffnung zum Greifen des Ballens (1);
Teile (4), die an den Ballenzangen (2) befestigt sind; und
Schienen (5), die die Teile (4) beweglich lagern, um den Ballen (1) zu transportieren und auf die drehbaren Brechmesser (9) abzusenken, **dadurch gekennzeichnet, dass** das Gerät ferner Folgendes einschließt:
ein Messergehäuse (7), wobei sich die Brechmesser (9) im Messergehäuse (7) befinden;
die Brechmesser (9) konfiguriert sind, um den Ballen (1) von seiner unteren Oberfläche her aufreißen, wobei die Brechmesser (9) sowohl gerade Messer als auch Messer mit gebogenem Flansch umfassen;
die Brechmesser (9) im Messergehäuse (7) auf horizontalen Wellen montiert sind, sodass sie zusammen mit diesen Wellen mindestens zwei rotierende Messertrommeln (8) bilden;
und dass das Geräz ferner Schienen (5) und von diesen Schienen getragene Teile (4) einschließt, wobei diese Teile (4) die Befestigungsteile (3) sowie Energieeinheiten (6) zur Realisierung einer Bewegungsanordnung einschließen, mittels derer ein Abstand der Ballenzangen (2) zum Messergehäuse (7) einstellbar ist.

2. Gerät nach Anspruch 1, **dadurch gekennzeichnet, dass** mindestens der Hauptteil der Messertrommeln (8) eine solche Drehrichtung aufweist, bei der die Brechmesser (9) versuchen, aus dem Ballen (1) gelöstes Material zur Mitte hin zu befördern und unter den Ballen (1) fallen zu lassen.

3. Gerät nach Anspruch 1, **dadurch gekennzeichnet, dass** das Messergehäuse (7) eine unterhalb der Messertrommeln (8) angeordnete Verteilerplatte (12) einschließt, die so angeordnet ist, dass sie das beim Aufbrechen des Ballens (1) aus diesem gelöste Material an einer ausgewählten Stelle am Außenrand nach unten fallen lässt.

4. Gerät nach Anspruch 1, **dadurch gekennzeichnet, dass** die Ballen (1) so angeordnet sind, dass sie sowohl aufgrund ihres Eigengewichts als auch aufgrund der Bewegung der Ballenzangen (2) gegen die Brechmesser (9) drücken.

## Revendications

1. Appareil destiné à la manutention et à la désintégration d'une balle de foin, d'aliments pour animaux ou de paille (1) de grande taille pesant plus de 100 kilogrammes, ledit dispositif incluant :
des pièces de fixation (3) destinées à fixer l'appareil à des liaisons de chargeur d'une machine de travail ;
des liaisons destinées à recevoir une énergie d'entraînement pour ledit appareil à partir d'au moins une prise de force de la machine de travail ;
des couteaux désintégrateurs rotatifs (9) ;
des dispositifs de préhension de balle (2), ayant une ouverture réglable pour saisir la balle (1) ;
des pièces (4) fixées aux dispositifs de préhension de balle (2) ; et
des rails (5) supportant de manière mobile les pièces (4) pour transférer la balle (1) et pour abaisser la balle (1) sur le dessus des couteaux désintégrateurs rotatifs (9), **caractérisé en ce que** l'appareil incluant en outre :
un logement de couteaux (7), dans lequel lesdits couteaux désintégrateurs (9) se trouvent dans le logement de couteaux (7) ;
les couteaux désintégrateurs (9) sont conçus pour désintégrer la balle (1) à partir de sa surface inférieure, dans lequel lesdits couteaux désintégrateurs (9) comprennent à la fois des couteaux droits et des couteaux ayant une bride incurvée ;
les couteaux désintégrateurs (9) situés dans le logement de couteaux (7) sont montés sur des arbres horizontaux pour former au moins deux tambours porte-couteaux rotatifs (8) avec lesdits arbres ;
et **en ce que** l'appareil comporte en outre des rails (5) et des pièces (4) supportées par lesdits rails, lesquelles pièces (4) comportent lesdites pièces de fixation (3) ainsi que des unités motrices (6) pour mettre en œuvre un agencement de mouvement au moyen duquel une distance des organes de préhension de balle (2) par rapport audit logement de couteaux (7) est réglable.

2. Appareil selon la revendication 1, **caractérisé en ce qu'**au moins la majeure partie des tambours porte-couteaux (8) a un sens de rotation tel que les couteaux désintégrateurs (9) tendent à transférer la matière détachée de la balle (1) vers le milieu et à la faire tomber sous la balle (1).

3. Appareil selon la revendication 1, **caractérisé en ce que** le logement de couteaux (7) comporte une plaque de distribution (12) située sous les tambours porte-couteaux (8), laquelle plaque est agencée pour laisser tomber la matière détachée de la balle (1) en un point sélectionné sur le bord extérieur vers le bas pendant la désintégration de la balle (1).

4. Appareil selon la revendication 1, **caractérisé en ce que** les balles (1) sont agencées pour être pressées contre les couteaux désintégrateurs (9) à la fois en raison de leur propre poids et en raison du mouvement des dispositifs de préhension de balle (2).
